# EUROPÄISCHE PATENTSCHRIFT

(11) **EP 0 984 183 B1**
(45) Veröffentlichungstag und Bekanntmachung des Hinweises auf die Patenterteilung: **20.10.2004**
(21) Anmeldenummer: 99250297.1
(22) Anmeldetag: 30.08.1999
(51) Int. Cl.: F16D 3/79

(54) **Flexible Ganzstahl-Wellen-Kupplung**
Flexible steel coupling
Accouplement élastique tout acier

(30) Priorität: 29.08.1998 DE 19839400
(43) Veröffentlichungstag der Anmeldung: 08.03.2000
(73) Patentinhaber: ATEC-Weiss GmbH & Co. KG, D-48691 Vreden (DE)
(72) Erfinder: Scheithauer, Günter, 48691 Vreden (DE); Valtwies, Ewald, 46345 Südlohn (DE); Millet, Patrice, Dr. Ing., 48691 Vreden (DE); Weiss, Rudolf, 48691 Vreden (DE)
(74) Vertreter: COHAUSZ & FLORACK

(56) Entgegenhaltungen:
- DE-A- 3 443 485
- US-A- 4 747 723
- US-A- 5 545 090
- PATENT ABSTRACTS OF JAPAN vol. 1995, no. 06, 31. Juli 1995 (1995-07-31) & JP 07 063227 A (DAIDO SPRAGUE KK), 7. März 1995 (1995-03-07)
- PATENT ABSTRACTS OF JAPAN vol. 1999, no. 05, 31. Mai 1999 (1999-05-31) & JP 11 051070 A (DENSO CORP), 23. Februar 1999 (1999-02-23)

## Beschreibung

Die Erfindung betrifft eine flexible Ganzstahl-Wellenkupplung mit zwei Anschlußflanschen und einem zwischen den Anschlußflanschen angeordnetem Zwischenstück, wobei zwischen jedem der beiden Anschlußflansche und dem Zwischenstück jeweils ein Lamellenkranz angeordnet ist, der mittels umfangsmäßig verteilt angeordneter Schraubbolzen und jeweils einen radial vorstehenden Anschlag aufweisender Spannbuchsen sowie auf den Spannbuchsen gelagerter Abstandsringe wechselweise mit dem jeweiligen Anschlußflansch und dem Zwischenstück verbunden ist, so daß die Anschlußflansche drehstarr aber winkel- und axialbeweglich miteinander verbunden sind, wobei den mit den Anschlußflanschen verbundenen Schraubbolzen jeweils nur eine einzelne Spannbuchse zugeordnet ist.

Eine derartige Wellenkupplung ist beispielsweise aus der DE 34 43 485 A1 bekannt. Diese Kupplung hat sich in der Praxis grundsätzlich bewährt. Es hat sich jedoch gezeigt, daß sie aufgrund ihrer Abmessungen bei beengten Platzverhältnissen zwischen zu verbindenden Wellenenden nicht oder nur schwierig montiert werden kann.

Der Erfindung lag daher die Aufgabe zugrunde, eine Wellenkupplung der eingangs genannten Art derart zu modifizieren, daß sie einen kompakten Aufbau aufweist und unter beengten Platzverhältnissen leicht montier- sowie demontierbar ist.

Diese Aufgabe wird bei einer gattungsgemäßen Wellenkupplung dadurch gelöst, daß die Spannbuchsen, welche den mit den Anschlußflanschen verbundenen Schraubbolzen zugeordnet sind, jeweils ein Innengewinde zur Verschraubung des Schraubbolzens aufweisen, daß das Zwischenstück ein Zwischenring ist, und daß an jedem der beiden Anschlußflansche Kupplungsschalenpaare angeordnet sind, wobei eine der beiden Schalen jedes Kupplungsschalenpaares einstückig mit dem zugeordneten Anschlußflansch ausgebildet ist.

Die erfindungsgemäße Wellenkupplung zeichnet sich durch einen sehr kurzen, kompakten Aufbau sowie eine geringe Anzahl von Einzelteilen aus und läßt sich unter engsten Platzverhältnissen einfach montieren bzw. demontieren, ohne daß die miteinander zu verbindenden Wellen in Axialrichtung auseinandergerückt werden müssen.

Die Verbindung der Lamellenkränze mit dem Zwischenring kann nach einer bevorzugten Ausgestaltung in der Weise erfolgen, daß die mit dem Zwischenring verbundenen Schraubbolzen in in dem Zwischenring ausgebildeten Gewindebohrungen eingeschraubt sind. Bei dieser Ausgestaltung werden zur Befestigung der dem Zwischenring zugeordneten Schraubbolzen keine Muttern benötigt, was die Montage bzw. Demontage der Kupplung erleichtert.

Eine andere vorteilhafte Ausgestaltung in bezug auf die Befestigung der Lamellenkränze an dem Zwischenring ist dadurch gekennzeichnet, daß die mit dem Zwischenring verbundenen Schraubbolzen jeweils beide Lamellenkränze mit dem Zwischenring verbinden. Diese Ausgestaltung hat den Vorteil einer besonders schnellen Montage, da der Zwischenring mit nur wenigen Schrauben zwischen dem vormontierten linken Kupplungsabschnitt und dem vormontierten rechten Kupplungsabschnitt befestigt werden kann. Vorzugsweise sind nur drei Schrauben zur Montage bzw. Demontage der vormontierten Kupplungsabschnitte erforderlich. Darüber hinaus ermöglicht diese Ausgestaltung ein Montage bzw. Demontage der Wellenkupplung auch bei einem relativ geringen Abstand der zu verbindenden Wellenenden, wie nachfolgend anhand eines Ausführungsbeispiels noch verdeutlicht wird.

Nach einer anderen vorteilhaften Ausgestaltung ist die axiale Gesamtlänge der erfindungsgemäßen Wellenkupplung insbesondere dann gering, wenn die Köpfe der mit den Anschlußflanschen verbundenen Schraubbolzen in einer Senkbohrung versenkt aufgenommen sind.

Eine weitere vorteilhafte Ausgestaltung der erfindungsgemäßen Kupplung besteht darin, daß die Spannbuchsen mit ihrem dem radial vorstehenden Anschlag entgegengesetzten Ende jeweils mit Spiel in eine Bohrungserweiterung des Anschlußflansches oder des Zwischenringes hineinragen und die Abstandsringe an dem Anschlußflansch bzw. dem Zwischenring abgestützt sind. Hierdurch wird die Montage der Kupplung weiter erleichtert.

Ein besonders kompakter Aufbau der erfindungsgemäßen Wellenkupplung läßt sich erzielen, wenn die Anschlußflansche und der Zwischenring Bohrungen aufweisen, in welche die Anschläge der Spannbuchsen jeweils mit Spiel eingreifen.

Nach einer anderen bevorzugten Ausgestaltung der erfindungsgemäßen Wellenkupplung ist vorgesehen, daß eine Schale jedes Kupplungsschalenpaares eine Nut zur Aufnahme einer Paßfeder aufweist. Hierdurch wird eine formschlüssige und damit besonders sichere drehstarre Verbindung der Wellenenden erreicht.

Die Erfindung wird nachfolgend anhand einer Ausführungsbeispiele darstellenden Zeichnung näher erläutert. Es zeigen:
- Fig. 1: eine Längsseitenansicht einer erfindungsgemäßen Wellenkupplung in teilweise geschnittener Darstellung,
- Fig. 2: eine Querschnittsansicht der Wellenkupplung gemäß Figur 1 im Bereich der Verschraubung eines Kupplungsschalenpaares,
- Fig. 3: eine vergrößerte Längsschnittansicht der unteren Hälfte der Kupplung gemäß Figur 1, in der der Schraubpunkt eines Lamellenpakets an dem zwischen den Anschlußflanschen angeordneten Zwischenstück besser zu erkennen ist,
- Fig. 4: eine vergrößerte Schnittansicht der oberen Hälfte der Kupplung gemäß Figur 1, in der der Schraubpunkt eines Lamellenpakets an einem der Anschlußflansche deutlicher erkennbar ist, und
- Fig. 5: eine zweite Ausführungsform einer erfindungsgemäßen Wellenkupplung in Längsseitenansicht sowie in teilweise geschnittener Darstellung.

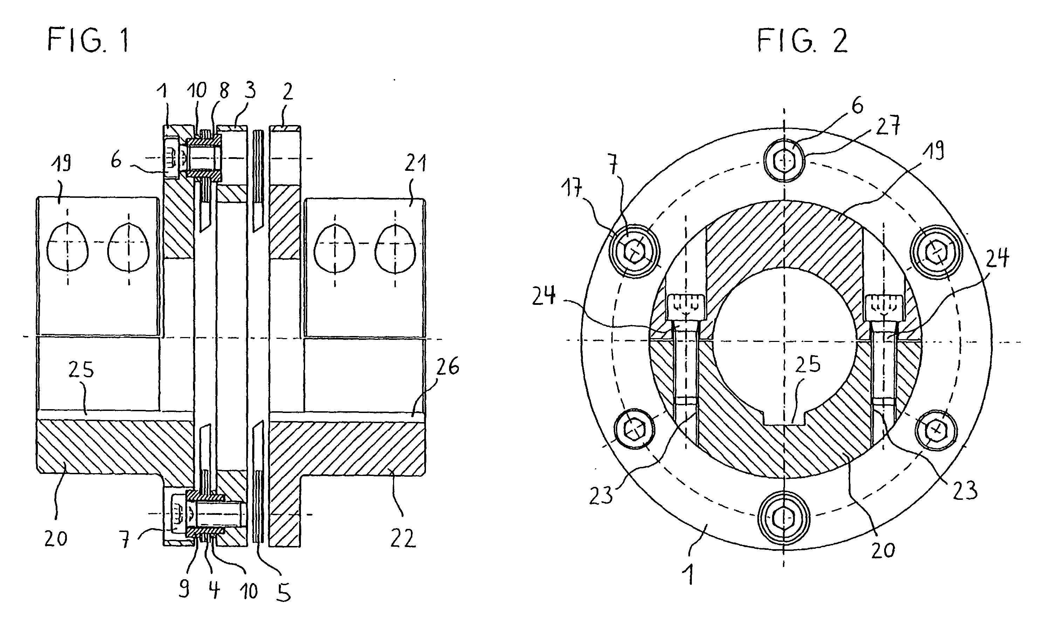

Die in den Figuren 1 bis 4 dargestellte Wellenkupplung weist zwei Anschlußflansche 1, 2 und ein zwischen den Anschlußflanschen angeordnetes Zwischenstück 3 in Form eines Zwischenrings auf. Zwischen den Anschlußflanschen 1, 2 und dem Zwischenstück 3 ist jeweils ein Lamellenpaketkranz 4, 5 angeordnet, der mittels umfangsmäßig verteilt angeordneten Schraubbolzen 6, 7 , Spannbuchsen 8, 9 und auf den Spannbuchsen gelagerten Abstandsringen 10 wechselweise mit dem zugeordneten Anschlußflansch und dem Zwischenstück verbunden ist.

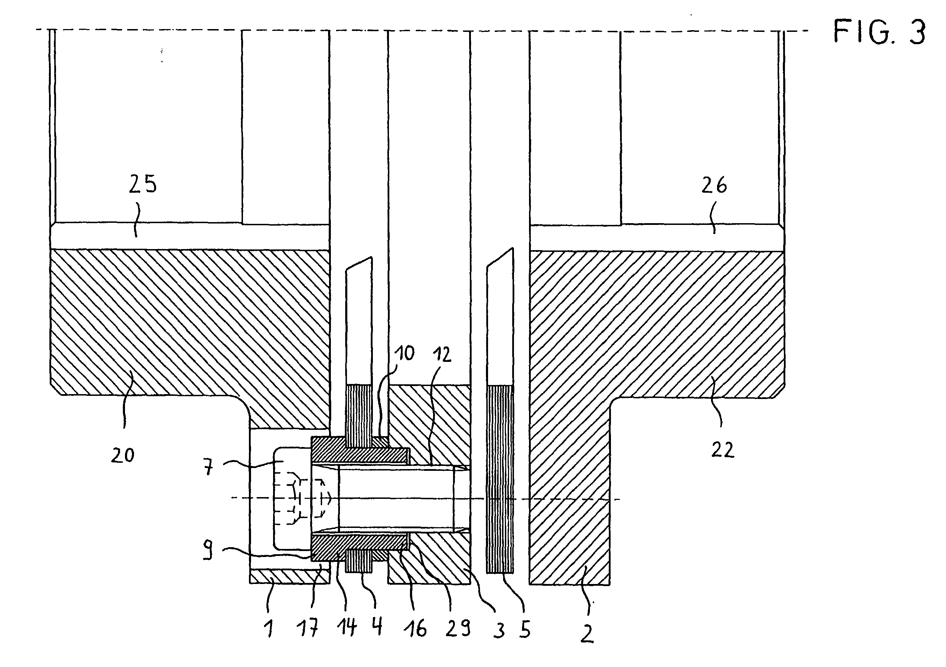

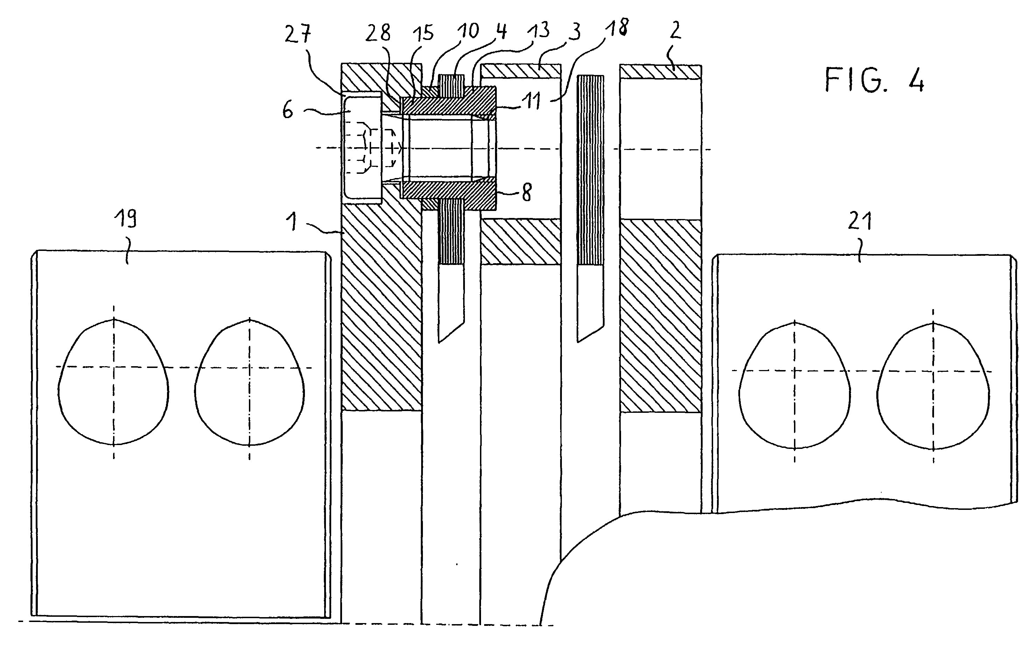

Wie in Figuren 1 und 4 dargestellt ist, sind die Spannbuchsen 8, welche den mit den Anschlußflanschen 1, 2 verbundenen Schraubbolzen 6 zugeordnet sind, jeweils mit einem Innengewinde 11 zur Verschraubung des Schraubbolzens 6 versehen. Demgegenüber sind die mit dem Zwischenring 3 verbundenen Schraubbolzen in in dem Zwischenring ausgebildeten Gewindebohrungen 12 eingeschraubt, wie in den Figuren 1 und 3 zu erkennen ist. Die Spannbuchsen 9, welche den mit dem Zwischenstück verbundenen Schraubbolzen 7 zugeordnet sind, weisen in dem dargestellten Ausführungsbeispiel kein Innengewinde auf, so daß die Schraubbolzen 7 mit ihrem jeweiligen Gewindeschaft durch die Spannbuchse 9 einfach hindurchgesteckt und mit der zugeordneten Gewindebohrung 12 im Zwischenring 3 verschraubt werden können.

Die Spannbuchsen 8 und 9, die zur Fixierung der Lamellenpakete 4, 5 jeweils einen radial vorstehenden Anschlag 13, 14 aufweisen, ragen mit ihrem dem Anschlag entgegengesetzten Ende 15, 16 jeweils mit Spiel in eine Senkbohrung 28, 29 des Anschlußflansches 1 bzw. des Zwischenrings 3. Die auf den Spannbuchsen 8, 9 gelagerten Abstandsringe 10 sind dabei an dem jeweiligen Anschlußflansch 1 bzw. dem Zwischenring 3 abgestützt. In den Fig. 3 und 4 ist ferner zu erkennen, daß die Anschlußflansche 1, 2 sowie der Zwischenring 3 Bohrungen 17, 18 aufweisen, in welche die Anschläge 13, 14 der Spannbuchsen 8, 9 jeweils mit radialem Spiel hineinragen.

Die Anschlußflansche 1, 2 der Wellenkupplung werden über Kupplungsschalenpaare 19, 20 bzw. 21, 22 an den zu verbindenden Wellenenden (nicht gezeigt) montiert. Eine Schale 20, 22 jedes Kupplungsschalenpaares ist dabei mit dem zugeordneten Anschlußflansch 1, 2 einstückig ausgebildet. In dem dargestellten Ausführungsbeispiel ist diese Schale 20 (bzw. 22) mit Innengewindebohrungen 23 versehen, so daß die zugeordnete obere Schalenhälfte 19 daran mittels Innensechskantschrauben 24 ohne die Verwendung von Muttern montierbar ist. Die mit den Anschlußflanschen 1, 2 einstückig ausgebildeten unteren Schalenhälften 20, 22 weisen zudem jeweils eine Nut 25, 26 zur Aufnahme einer Paßfeder auf.

Bei den der Befestigung der Lamellenpakete dienenden Schraubbolzen 6, 7 handelt es sich ebenfalls um Innensechskantschrauben. Es ist zu erkennen, daß die Schraubbolzen 6 und 7 unterschiedlich lang sind. Um eine besonders kurze Wellenkupplung zu erzielen und zugleich eine unmittelbar radiale Montage bzw. Demontage der lösbaren Kupplungsschalen 19, 21 zu ermöglichen, sind die Köpfe der mit den Anschlußflanschen verbundenen Schraubbolzen 6 jeweils in einer Senkbohrung 27 versenkt.

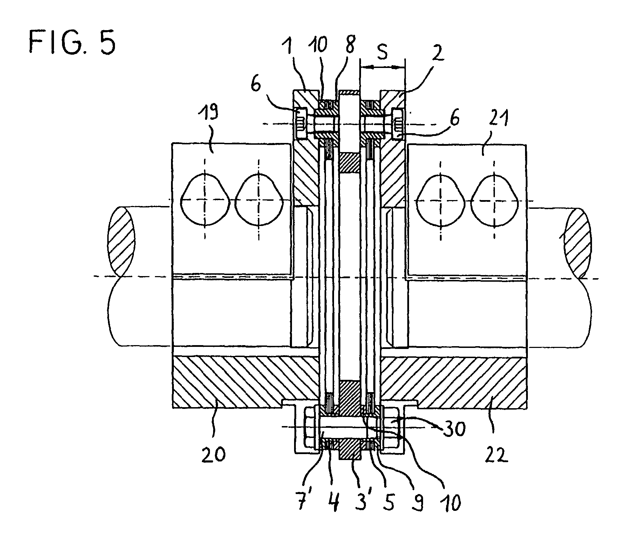

In Fig. 5 ist ein zweites Ausführungsbeispiel der erfindungsgemäßen Wellenkupplung dargestellt. Im Gegensatz zu dem zuvor beschriebenen Ausführungsbeispiel verbinden die mit dem Zwischenstück 3' verbundenen Schraubbolzen 7' jeweils beide Lamellenkränze 4, 5 mit dem Zwischenstück 3'. Zur Befestigung der Schraubbolzen 7' weist das ringförmig ausgebildete Zwischenstück 3' daher keine Gewindebohrungen, sondern Paßbohrungen ohne Innengewinde auf. Der Zwischenring 3' ist dabei auch schmaler ausgebildet, als der Zwischenring 3 in dem zuvor beschriebenen Ausführungsbeispiel. Zur Befestigung der Lamellenpakete 4, 5 an dem Zwischenring 3' sind die Schraubbolzen 7' auf beiden Seiten des Zwischenrings 3' jeweils mit einer Spannbuchse 9 und einem auf die Spannbuchse 9 aufgesteckten Abstandsring 10 versehen. Die Spannbuchsen weisen wiederum jeweils einen radial vorstehenden Anschlag auf, der in axialer Richtung am Kopf des Schraubbolzens 7' bzw. an der am anderen Ende angeordneten Mutter 30 abgestützt ist.

Es ist zu erkennen, daß bei an den Anschlußflanschen 1, 2 vormontierten Lamellenpaketen 4, 5 eine Montage bzw. Demontage auch bei einem relativ kleinen Wellenabstand möglich ist, da der insoweit erforderliche Mindestabstand allein von dem Maß S bestimmt wird, d.h. der Wellenabstand muß nur geringfügig größer sein als das Maß S. Die vormontierten Kupplungsabschnitte, die jeweils aus der Nabe mit der lösbaren Kupplungsschalenhälfte 19 bzw. 21 und dem an dem Anschlußflansch 1 bzw. 2 mittels der Spannbolzen 6 und den Spannbuchsen 8 sowie den Abstandsringen 10 befestigten Lamellenpaketen 4 bzw. 5 aufgebaut sind, können somit zwischen den Wellenenden ohne weitere Zerlegung ein- bzw. ausgebaut werden. Die Zwischenscheibe 3' wird dann mit drei Schraubbolzen 7' zwischen dem linken Kupplungsabschnit und dem rechten Kupplungsabschnitt befestigt.

Die Erfindung beschränkt sich in ihrer Ausführung nicht auf die vorstehend angegebenen Ausführungsbeispiele. Vielmehr sind mehrere Varianten denkbar. So kann beispielsweise bei dem in Fig. 5 gezeigten Ausführungsbeispiel die Mutter 30 fortgelassen werden und stattdessen die am Gewindeende des Schraubbolzens 7' angeordnete Spannbuchse 9 mit einem Innengewinde versehen werden.

## Patentansprüche

1. Flexible Ganzstahl-Wellenkupplung mit zwei Anschlußflanschen (1, 2) und einem zwischen den Anschlußflanschen angeordnetem Zwischenstück (3, 3'), wobei zwischen jedem der beiden Anschlußflansche und dem Zwischenstück jeweils ein Lamellenkranz (4, 5) angeordnet ist, der mittels umfangsmäßig verteilt angeordneter Schraubbolzen (6, 7, 7') und jeweils einen radial vorstehenden Anschlag (13, 14) aufweisender Spannbuchsen (8, 9) sowie auf den Spannbuchsen gelagerter Abstandsringe (10) wechselweise mit dem jeweiligen Anschlußflansch und dem Zwischenstück verbunden ist, so daß die Anschlußflansche drehstarr aber winkel- und axialbeweglich miteinander verbunden sind, wobei den mit den Anschlußflanschen verbundenen Schraubbolzen (6) jeweils nur eine einzelne Spannbuchse zugeordnet ist,
**dadurch gekennzeichnet, daß** die Spannbuchsen (8), welche den mit den Anschlußflanschen verbundenen Schraubbolzen (6) zugeordnet sind, jeweils ein Innengewinde (11) zur Verschraubung des Schraubbolzens aufweisen, daß das Zwischenstück (3, 3') ein Zwischenring ist, und daß an jedem der beiden Anschlußflansche Kupplungsschalenpaare (19, 20; 21, 22) angeordnet sind, wobei eine der beiden Schalen (20, 22) jedes Kupplungsschalenpaares einstückig mit dem zugeordneten Anschlußflansch (1, 2) ausgebildet ist.

2. Wellenkupplung nach Anspruch 1,
**dadurch gekennzeichnet, daß** die mit dem Zwischenring (3) verbundenen Schraubbolzen (7) in in dem Zwischenring (3) ausgebildeten Gewindebohrungen eingeschraubt sind.

3. Wellenkupplung nach Anspruch 1,
**dadurch gekennzeichnet, daß** die mit dem Zwischenring (3') verbundenen Schraubbolzen (7') jeweils beide Lamellenkränze (4, 5) mit dem Zwischenring (3') verbinden.

4. Wellenkupplung nach einem der vorstehenden Ansprüche,
**dadurch gekennzeichnet, daß** die Köpfe der mit den Anschlußflanschen (1, 2) verbundenen Schraubbolzen (6) in einer Senkbohrung (27) versenkt aufgenommen sind.

5. Wellenkupplung nach einem der vorstehenden Ansprüche, **dadurch gekennzeichnet, daß** die Spannbuchsen (8, 9) mit ihrem dem radial vorstehenden Anschlag (13, 14) entgegengesetzten Ende (15, 16) jeweils mit Spiel in eine Bohrungserweiterung (28, 29) des Anschlußflansches (1, 2) oder des Zwischenringes (3) hineinragen und die Abstandsringe (10) an dem Anschlußflansch (1, 2) bzw. dem Zwischenring (3) abgestützt sind.

6. Wellenkupplung nach einem der vorstehenden Ansprüche,
**dadurch gekennzeichnet, daß** die Anschlußflansche (1, 2) und der Zwischenring (3) Bohrungen (17, 18) aufweisen, in welche die Anschläge (13, 14) der Spannbuchsen (8, 9) jeweils mit Spiel eingreifen.

7. Wellenkupplung nach einem der vorstehenden Ansprüche,
**dadurch gekennzeichnet, daß** eine Schale (20, 22) jedes Kupplungsschalenpaares (19, 20; 21, 22) eine Nut (25, 26) zur Aufnahme einer Paßfeder aufweist.

## Claims

1. A flexible all-steel shaft coupling comprising two connecting flanges (1, 2) and an intermediate piece (3, 3') arranged between the connecting flanges, with a disk ring (4, 5) being arranged between each of the two connecting flanges and the intermediate piece; said disk ring being connected alternately to the respective connecting flange and the intermediate piece, by means of circumferentially-distributed studs (6, 7, 7') and tension sleeves (8, 9), each comprising a radially protruding end stop (13, 14), as well as spacer rings (10) held on the tension sleeves, so that the connecting flanges are interconnected so as to be torsionally rigid but with angular movement and axial movement; with each of the studs (6) connected to the connecting flanges being associated with only a single tension sleeve, **characterised in that** each of the tension sleeves (8) associated with the studs (6) connected to the connecting flanges, comprises an internal screw thread (11) for screwing the stud; that the intermediate piece (3, 3') is an intermediate ring; and that at each of the two connecting flanges, pairs of coupling shells (19, 20; 21, 22) are arranged, with one (20, 22) of the two shells of each pair of coupling shells being constructed in a single piece together with the associated connecting flange (1, 2).

2. A shaft coupling according to claim 1, **characterised in that** the studs (7) connected to the intermediate ring (3) are screwed into threaded bore holes provided in the intermediate ring (3).

3. A shaft coupling according to claim 1, **characterised in that** the studs (7') connected to the intermediate ring (3') in each instance connect both disk rings (4, 5) to the intermediate ring (3').

4. A shaft coupling according to one of the preceding claims, **characterised in that** the heads of the studs (6) connected to the connecting flanges (1, 2) are accommodated in a countersunk bore hole (27).

5. A shaft coupling according to one of the preceding claims, **characterised in that** those ends (15, 16) of the tension sleeves (8, 9) opposite the radially protruding end stop (13, 14) protrude with play into a bore-hole enlargement (28, 29) of the connecting flange (1, 2) or of the intermediate ring (3), and **in that** the spacer rings (10) are supported on the connecting flange (1, 2) or the intermediate ring (3).

6. A shaft coupling according to one of the preceding claims, **characterised in that** the connecting flanges (1, 2) and the intermediate ring (3) comprise bore holes (17, 18) with which the end stops (13, 14) of the tension sleeves (8, 9) interact with play.

7. A shaft coupling according to one of the preceding claims, **characterised in that** one shell (20, 22) of each pair of coupling shells (19, 20; 21, 22) comprises a groove (25, 26) for accommodating a feather key.

## Revendications

1. Accouplement d'arbre tout acier flexible comprenant deux brides de raccordement (1, 2) et une pièce intermédiaire (3, 3') disposée entre les brides de raccordement, une couronne de lamelles (4, 5) étant disposée respectivement entre chacune des deux brides de raccordement et la pièce intermédiaire, laquelle couronne est reliée, au moyen de boulons filetés (6, 7, 7') disposés et répartis sur le pourtour et au moyen de douilles de serrage (8, 9) présentant respectivement une butée (13, 14) débordant dans le sens radial et de bagues d'espacement (10) logées sur les douilles de serrage alternativement avec la bride de raccordement respective et la pièce intermédiaire, de sorte que les brides de raccordement sont reliées entre elles de façon fixe en rotation et mobiles en angle et en axe, une seule douille de serrage étant attribuée à chacun des boulons filetés (6) reliés aux brides de raccordement, **caractérisé en ce que** les douilles de serrage (8), qui sont attribuées aux boulons filetés (6) reliés aux brides de raccordement, présentent chacune un filetage intérieur (11) pour le vissage du boulon fileté et **en ce que** la pièce intermédiaire (3, 3') est une bague intermédiaire et **en ce que** des paires de coquilles d'accouplement (19, 20 ; 21, 22) sont disposées sur chacune des deux brides de raccordement, une des deux coquilles (20, 22) de chaque paire de coquilles d'accouplement étant conçue d'une seule pièce avec la bride de raccordement (1, 2) attribuée.

2. Accouplement d'arbre selon la revendication 1, **caractérisé en ce que** les boulons filetés (7) reliés à la bague intermédiaire (3) sont vissés dans les alésages filetés formés dans la bague intermédiaire (3).

3. Accouplement d'arbre selon la revendication 1, **caractérisé en ce que** les boulons filetés (7') reliés à la bague intermédiaire (3') relient respectivement deux couronnes de lamelles (4, 5) à la bague intermédiaire (3').

4. Accouplement d'arbre selon l'une quelconque des revendications précédentes, **caractérisé en ce que** les têtes des boulons filetés (6) reliés aux brides de raccordement (1, 2) sont réceptionnées noyées dans un alésage noyé (27).

5. Accouplement d'arbre selon l'une quelconque des revendications précédentes, **caractérisé en ce que** les douilles de serrage (8, 9) débordent par leur extrémité (15, 16) opposée à la butée (13, 14) faisant saillie radialement respectivement avec du jeu dans un élargissement d'alésage (28, 29) de la bride de raccordement (1, 2) ou de la bague intermédiaire (3) et les bagues d'espacement (10) sont soutenus sur la bride de raccordement (1, 2) ou la bague intermédiaire (3).

6. Accouplement d'arbre selon l'une quelconque des revendications précédentes, **caractérisé en ce que** les brides de raccordement (1, 2) et la bague intermédiaire (3) présentent des alésages (17, 18), dans lesquels les butées (13, 14) des douilles de serrage (8, 9) s'engagent respectivement avec du jeu.

7. Accouplement d'arbre selon l'une quelconque des revendications précédentes, **caractérisé en ce qu'**une coquille (20, 22) de chaque paire de coquilles d'accouplement (19, 20 ; 21, 22) présente une rainure (25, 26) pour le logement d'un ressort d'ajustage.
